Europäisches Patentamt

European Patent Office

Office européen des brevets

(19)

(11) EP 0 568 427 B1

(12) FASCICULE DE BREVET EUROPEEN

(45) Date de publication et mention
de la délivrance du brevet:
17.06.1998 Bulletin 1998/25

(51) Int Cl.⁶: G01S 13/93, G01S 13/42

(21) Numéro de dépôt: 93401059.6

(22) Date de dépôt: 23.04.1993

(54) **Procédé et système de détection d'un ou plusieurs objets dans une zone angulaire, et applications**

Verfahren und Vorrichtung zur Detektion von einem oder mehreren Objekten in einem Winkelsektor, mit Anwendungen

Method and system for detecting one or more objects in an angular sector, with applications

(84) Etats contractants désignés:
DE FR GB IT NL SE

(30) Priorité: 30.04.1992 FR 9205373

(43) Date de publication de la demande:
03.11.1993 Bulletin 1993/44

(73) Titulaire: THOMSON-CSF
75008 Paris (FR)

(72) Inventeurs:
• Cornic, Pascal
F-92402 Courbevoie Cedex (FR)
• Crenn, Patrice
F-92402 Courbevoie Cedex (FR)

(74) Mandataire: Benoit, Monique et al
THOMSON-CSF-S.C.P.I.,
13, Avenue du Président
Salvador Allende
94117 Arcueil Cédex (FR)

(56) Documents cités:
DE-A- 2 642 144           FR-A- 2 172 188
FR-A- 2 199 153           US-A- 4 638 321
US-A- 5 008 678

• R. G. WILEY 'Electronic Intelligence: The
Interception of Radar Signals' 1985 , ARTECH
HOUSE , US, DEDHAM
• M. I. SKOLNIK 'introduction to Radar systems'
1981 , MCGRAW-HILL , USA

## Description

La présente invention concerne un procédé et un système de détection d'un ou plusieurs objets dans une zone angulaire, et différentes applications.

Un domaine particulier d'applications de l'invention concerne les dispositifs anti-collision, notamment pour automobiles. Dans ce domaine, on cherche à faire une analyse fine d'une aire située à l'avant d'un véhicule. L'objet de cette analyse est de prévenir immédiatement le conducteur du véhicule lorsqu'il y a risques de collisions. Les décisions d'alerte des dispositifs d'anti-collision sont fonction de différents critères dépendant eux-mêmes de la position et de la vitesse relative des autres véhicules présentant le risque, de la signature radar...

Le but de la présente invention est d'affiner l'analyse spatiale de l'aire située à l'avant d'un véhicule de façon à ce que l'on puisse d'une part, situer les véhicules détectés par rapport aux voies de circulation, et d'autre part, distinguer deux véhicules proches l'un de l'autre.

Pour ce faire, le radar d'analyse doit posséder des caractéristiques très contraignantes concernant son pouvoir de résolution et sa précision angulaire.

Les solutions habituellement proposées consistent à utiliser un radar à faisceau étroit et à balayer l'aire que l'on veut analyser. Le balayage est généralement mécanique, ce qui présente les inconvénients d'être difficile à implanter sur des véhicules séries, et surtout d'avoir une fiabilité insuffisante vis-à-vis des exigences de sécurité.

Par ailleurs, il est impossible d'adapter un balayage électronique pour ce type de radars, car on ne sait pas, à l'heure actuelle, réaliser technologiquement une antenne à balayage électronique fonctionnant en ondes millimétriques. Les coûts de réalisation seraient, en outre, prohibitifs par rapport au marché visé.

On connaît du document FR-A-2.172.188 un procédé de détection par ondes électromagnétiques d'un ou de plusieurs objets situés dans une zone angulaire donnée, consistant à éclairer successivement à l'émission une pluralité de zones élémentaires de ladite zone angulaire, selon au moins un diagramme d'émission présentant un lobe principal (3) défini comme étant la zone du diagramme d'émission située au-dessus d'un seuil fixé supérieur ou égal au niveau des lobes secondaires (4) dudit diagramme, à recevoir des signaux échos sur un réseau lacunaire (22) composé de plusieurs capteurs (22') et possédant une fonction de réseau telle que, pour chaque zone élémentaire éclairée, un premier lobe (6) de cette fonction de réseau soit compris dans le lobe principal du diagramme d'émission, les autres lobes (7) étant en dehors du lobe principal, puis à détecter (10) la présence d'échos reçus et en déduire la position angulaire des objets détectés.

Pour la mise en oeuvre du procédé, ce document enseigne l'utilisation d'antennes à balayage commandées de manière à ce que le premier lobe de la fonction de réseau soit aligné avec le lobe principal à l'émission.

La présente invention propose un procédé intermédiaire entre le balayage mécanique et le balayage électronique, consistant à adapter le principe de la FFC (Formation de Faisceaux par le Calcul) au problème posé.

Plus précisément, l'invention concerne un procédé de détection par ondes électromagnétiques d'un ou de plusieurs objets situés dans une zone angulaire donnée tel que défini dans les revendications 1 à 6.

L'invention concerne également un système de détection par ondes électromagnétiques pour la mise en oeuvre du procédé selon les revendications 1 à 6, tel que défini dans les revendications 7 à 11.

D'autres objets de la présente invention concernent différentes applications du système selon l'invention à l'anticollision et à la surveillance du trafic routier.

L'invention, ainsi que ses avantages, sera mieux comprise au vu de la description suivante, faite en référence aux figures annexées :

- La figure 1 montre l'allure d'une fonction de réseau linéaire de N capteurs équidistants, présentant des lobes d'ambiguïté ;
- La figure 2a est un exemple d'un diagramme d'émission selon l'invention ;
- Les figures 2b et 2c montrent l'allure de la fonction de réseau à la réception, selon l'invention, dans un exemple particulier où le faisceau est dépointé ;
- La figure 3a illustre le procédé de formation de faisceaux par le calcul effectuée selon l'invention ;
- La figure 3b est une amélioration possible du procédé de la figure 3a ;
- La figure 4 est un exemple de réalisation possible d'un système de détection pour la mise en oeuvre du procédé ;
- La figure 5 donne l'allure d'un diagramme d'émission du système de la figure 4 ;
- La figure 6 détaille un exemple de réalisation possible du récepteur de la figure 4;
- Les figures 7 et 8 montrent les résultats obtenus par simulations du système de la figure 4, respectivement sans dépointage puis avec dépointage.

Le procédé et le système selon l'invention vont être décrits par la suite dans le cadre d'une application particulière, donnée à titre d'exemple, et concernant les dispositifs d'anti-collision pour automobiles. Ainsi, les valeurs numériques ne sont données que dans le but de fixer les idées, et ne constituent en rien une limitation de l'invention.

L'adaptation du principe de la formation de faisceaux par le calcul, que nous noterons FFC par la suite, à notre application particulière, a dû satisfaire à un bon nombre de contraintes :

La première contrainte importante est que tout dispositif d'anti-collision pour automobiles doit fonctionner en ondes millimétriques, ceci afin de ne pas avoir des dimensions d'antennes prohibitives à l'émission et à la réception. Or, en s'imposant un réseau de capteurs à la réception, la Demanderesse s'est heurtée à un nouveau problème consistant au dimensionnement de ce réseau. En effet, il y a un compromis à faire entre, d'une part, la nécessité d'augmenter la distance entre les différents capteurs pour garantir la faisabilité du dispositif dans la gamme des ondes millimétriques, et, d'autre part, la taille du réseau et le nombre de capteurs utilisés qui ne doivent pas être trop importants pour des raisons d'encombrement et de coûts. Le réseau lacunaire est un réseau qui répond bien, de par sa structure, au compromis voulu. Cependant, il présente l'inconvénient majeur d'introduire des lobes de réseaux périodiques en angle, correspondant à autant d'ambiguïtés angulaires.

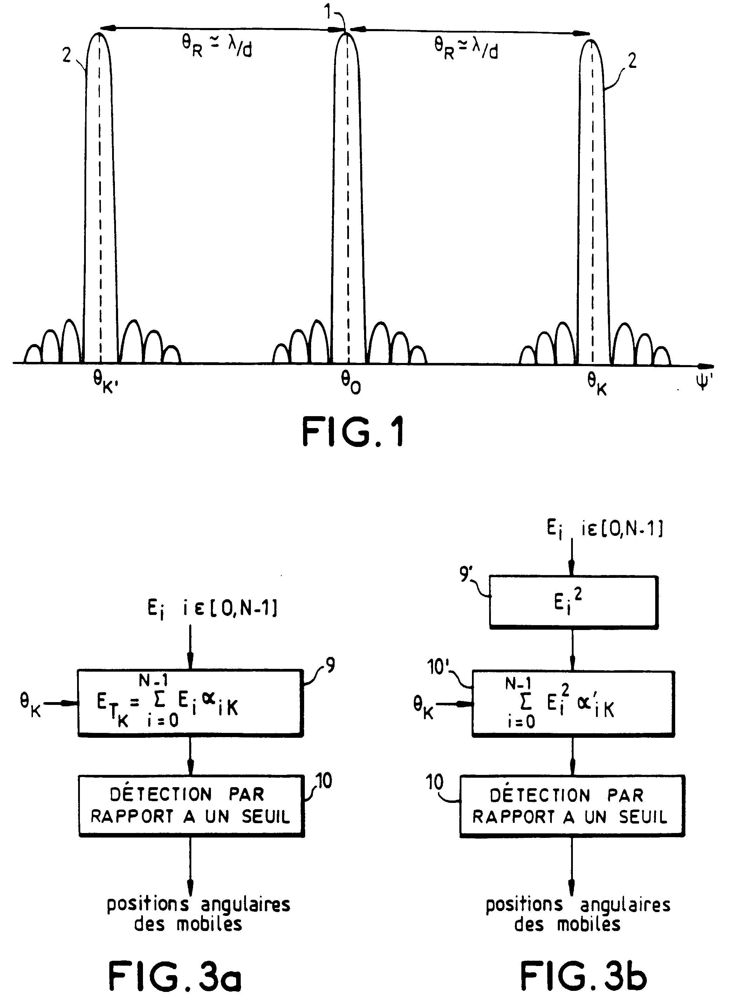

La figure 1 montre un exemple d'une fonction d'un réseau linéaire formé de N capteurs équidistants d'une distance d, appelée pas du réseau, chaque capteur présentant une fonction caractéristique de rayonnement donnée. Rappelons que, pour un tel réseau, la fonction de réseau, encore appelée fonction caractéristique de l'alignement, est donnée par la relation :

$$f(\psi) = \frac{\sin\left(N.\dfrac{\psi'}{2}\right)}{\sin\left(\dfrac{\psi'}{2}\right)} \; Avec \;\; \psi' = 2\pi d \frac{\sin\theta}{\lambda} + \phi$$

où $\quad \theta \quad$ est la direction angulaire du signal reçu

$\quad\quad \lambda \quad$ est la longueur d'onde de travail

$\quad\quad d \quad$ est le pas du réseau

$\quad\quad \phi \quad$ est le déphasage constant entre chaque capteur et son suivant

Le maximum principal de cette fonction, référencé 1 sur la figure 1, est obtenu pour un angle $\theta_o$ tel que

$$2\pi d \frac{\sin\theta_o}{\lambda} + \phi = 0$$

Les maxima correspondant aux lobes d'ambiguïté, référencés 2 sur la figure 1, sont obtenus pour tous les angles $\theta_k$ tels que

$$2\pi \frac{d}{\lambda}[\sin\theta_k - \sin\theta_o] = 2k\pi$$

L'intervalle entre deux lobes successifs du réseau, c'est-à-dire la périodicité du réseau est donc

$$\theta_R = Arcsin \frac{\lambda}{d} \simeq \frac{\lambda}{d}$$

Sur la figure 1, seuls trois lobes ont été représentés. Bien entendu, il en existe plus.

La conséquence de l'existence de ces lobes d'ambiguïté est que, si l'antenne émission, devant observer une zone angulaire $\Omega$ donnée, éclaire une zone comprenant plus d'un lobe du réseau de réception, il sera impossible de discriminer les échos reçus.

Une première solution consiste à écarter le plus possible ces lobes de réseau, c'est-à-dire à diminuer le pas du

3

réseau. Cette solution est cependant écartée car elle conduit automatiquement à un nombre de capteurs élevé et se heurte de plus à la limite imposée pour la faisabilité du réseau en ondes millimétriques.

Le procédé selon l'invention propose d'inhiber l'effet des lobes d'ambiguïté en partitionnant la zone angulaire $\Omega$ observée en une pluralité de zones élémentaires éclairées successivement de telle sorte que lorsqu'une zone élémentaire est éclairée par un lobe principal donné du diagramme émission, il y ait un lobe du réseau de réception compris préférentiellement dans la largeur à 3 dB de ce lobe principal, les deux autres lobes de réseau immédiatement prédécesseur et successeur étant très peu, voire pas du tout éclairés par ce même lobe principal.

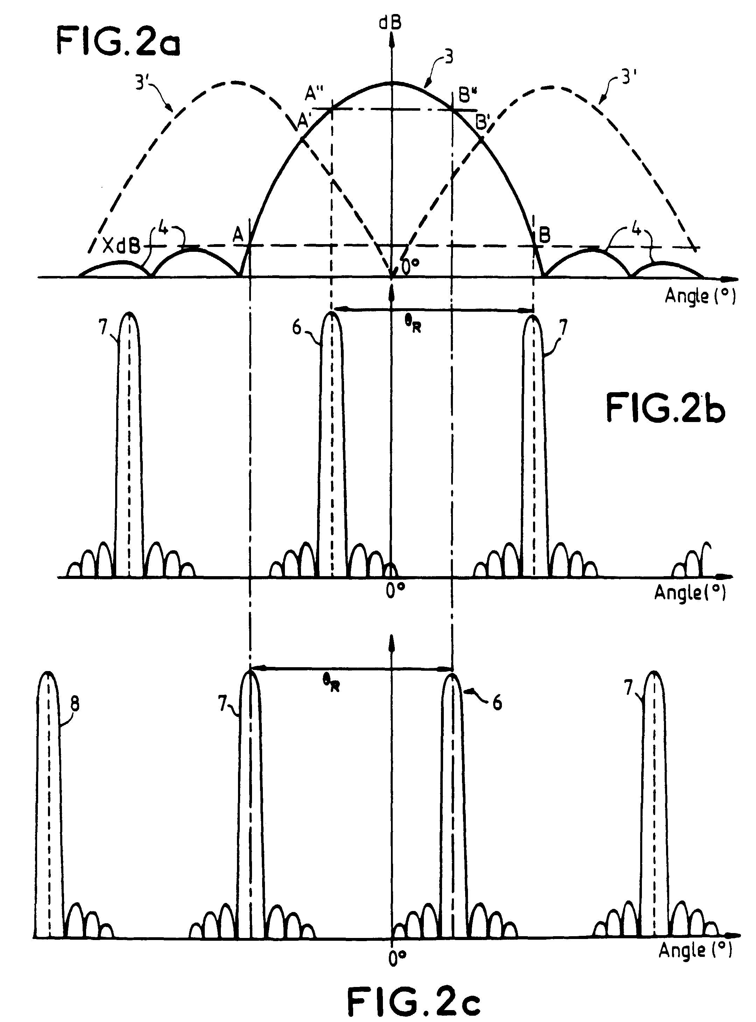

Les figures 2a à 2c illustrent le principe du procédé :

Sur la figure 2a, on a représenté l'allure d'un diagramme possible d'émission pour l'éclairement d'une zone élémentaire donnée de la zone angulaire totale à observer. Ce diagramme d'émission possède un lobe principal 3 défini comme étant la zone du diagramme d'émission située au-dessus d'un seuil fixé de X dB et couvrant de préférence totalement la zone élémentaire. Il possède également des lobes secondaires 4 dont le niveau est inférieur à ce même seuil de X dB donné, par exemple -23 dB. On appelle A et B les points d'intersection entre le lobe principal 3 et le seuil de X dB. On a également représenté en pointillés l'allure des lobes principaux 3' éclairant les zones élémentaires de part et d'autre de la zone élémentaire considérée. Rappelons que, selon l'invention, les éclairements ne se produisent pas en même temps, mais successivement. Les lobes principaux 3 et 3' se coupent en deux points A' et B' que l'on peut choisir préférentiellement égaux aux deux points A'', B'' correspondant à la largeur à 3 dB du lobe principal 3.

On appelle partie utile le segment de courbe compris entre les points A' et B'. La partie utile est donc englobée par le lobe principal 3, et correspond à la zone de non-recouvrement des lobes principaux d'émission 3' pour des zones élémentaires consécutives.

Les figures 2b et 2c montrent les contraintes que l'on se fixe pour la fonction du réseau de réception : La fonction de réseau doit être telle que, pour la zone élémentaire éclairée selon le diagramme d'émission de la figure 2a, il existe un premier lobe de réseau 6 appartenant à la partie utile du diagramme émission. Préférentiellement, ce premier lobe de réseau 6 est inclus dans la largeur à 3 dB du diagramme émission, et nous avons représenté sur les figures 2b et 2c les positions limites de ce premier lobe de réseau 6 dans ce cas préférentiel. Une seconde condition essentielle selon l'invention sur la fonction de réseau est que les autres lobes 7 et 8 de réseau n'appartiennent pas au lobe principal 3 tel que défini précédemment du diagramme émission, de façon à ce qu'ils soient très peu ou pas éclairés. On voit sur la figure 2b (respectivement sur la figure 2c) que cela impose une périodicité $\theta_R$ minimum de la fonction de réseau, à savoir celle pour laquelle le lobe de réseau 7 immédiatement successeur (respectivement prédécesseur) du premier lobe de réseau 6 doit se situer au minimum à l'intersection B (respectivement A) du lobe principal 3 d'émission de la figure 2a avec le seuil de X dB.

Nous décrirons ultérieurement, dans une application précise, comment toutes les contraintes fixées sur la fonction de réseau permettent de définir complètement le réseau lacunaire de réception.

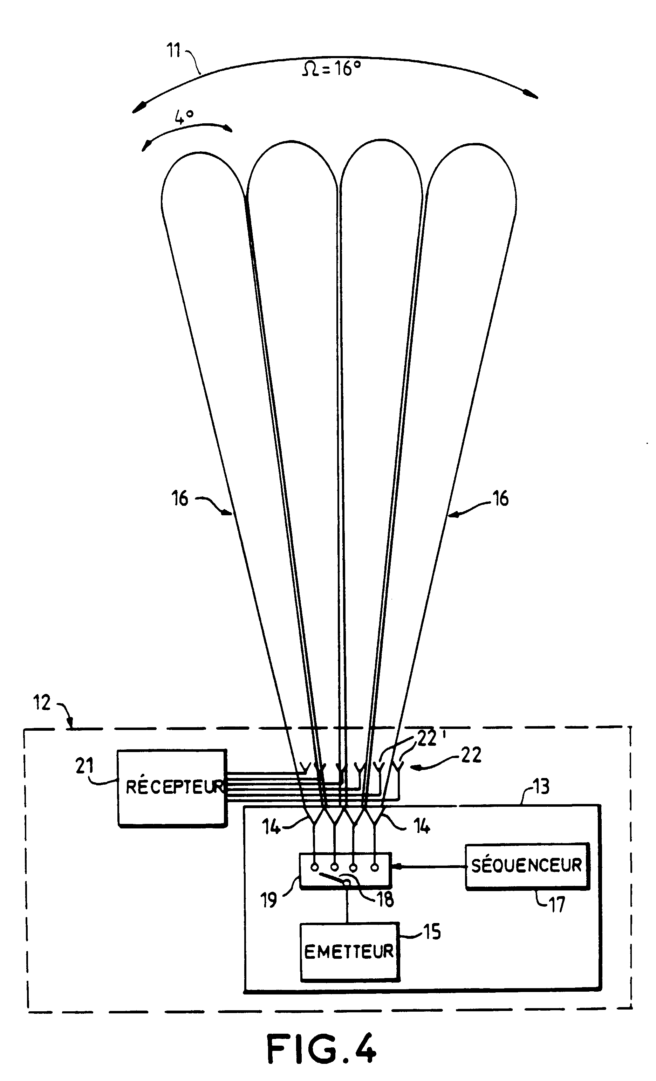

La figure 3a illustre la formation de faisceaux par le calcul effectuée à la réception selon l'invention :

Rappelons que la technique de formation de faisceaux consiste à effectuer un filtrage linéaire des signaux reçus par les capteurs du réseau pour remettre en phase les signaux provenant de certaines directions $\theta_k$. Or, le déphasage entre le champ électrique $E_i$ reçu par un capteur i et le champ $E_o$ d'un capteur O pris comme référence est donné par

$$i \, \psi = i \, 2 \, \pi d \, \frac{\sin \theta_k}{\lambda}$$

Pour compenser ce déphasage dans une direction $\theta_k$ fixée, il faut donc multiplier le champ électrique $E_i$ par un coefficient $\alpha_{ik}$ tel que

$$\alpha_{ik} = \exp\left[ -j2 \, \pi \, id \, \frac{\sin \theta_k}{\lambda} \right]$$

de façon à obtenir des champs $E'_i = E_i . \alpha_{ik}$ qui soient en phase lorsque l'on pointe dans la direction $\theta_k$. Le champ total $E_{TK}$ reçu dans la direction $\theta_k$ est alors donné par la relation

$$E_{T_K} = \sum_{i=0}^{N-1} E_i \, \alpha_{ik}$$

Sur la figure 3a, l'étape référencée 9 représente cette formation de faisceaux par le calcul effectuée, successivement ou parallèlement, dans une pluralité de directions angulaires $\theta_k$ appartenant à la zone angulaire $\Omega$, et notamment à la zone élémentaire éclairée.

L'étape suivante, référencée 10, consiste à détecter, par comparaison avec un seuil donné les signaux $E_{T_K}$ reçus dans les différentes directions angulaires $\theta_k$. Cette détection permet de déduire la position angulaire des différents mobiles détectés.

Dans l'application à l'anti-collision d'automobiles, la connaissance des positions angulaires permet d'élaborer des critères d'évaluation du danger.

Une amélioration possible du procédé précédemment décrit permet d'affiner encore plus la localisation angulaire :

En effet, considérons le champ électrique $E_i$ reçu d'une direction $\theta$ par un capteur i quelconque. Ce champ $E_i$ s'exprime simplement en fonction du champ $E_o$ d'un capteur O pris comme référence par la relation

$$E_i = E_o \exp\left[ j2\pi i d \frac{\sin\theta}{\lambda} \right] \quad (1)$$

En utilisant la somme des termes d'une série géométrique, on peut alors exprimer le champ total $E_T$ reçu de la direction $\theta$ par la relation

$$\left.\begin{aligned} E_T &= \sum_{i=1}^{n} E_i = E_o \, f(\psi) \\ avec \; \psi &= 2\pi d \frac{\sin\theta}{\lambda} \end{aligned}\right\} \quad (2)$$

et $f(\psi)$, la fonction du réseau.

Si on effectue par ailleurs la somme des champs électriques $E_i$ élevés au carré, on aboutit à la relation

$$\left.\begin{aligned} \sum_{i=1}^{n} E_i^2 &= E_o^2 \, f(\psi') \\ avec \; \psi' &= 2\pi.(2d) \frac{\sin\theta}{\lambda} \end{aligned}\right\} \quad (3)$$

En comparant les relations (2) et (3), on peut remarquer que l'élévation au carré a pour conséquence de multiplier fictivement par deux le pas du réseau, et par conséquent, la dimension D du réseau. Or, la finesse de détection (ou précision angulaire) est donnée par la largeur à 3 dB du lobe principal de la fonction de réseau, laquelle est inversement proportionnelle à la dimension D du réseau. L'élévation au carré a donc pour conséquence une amélioration de la résolution angulaire d'un rapport 2.

La figure 3b illustre le procédé selon l'invention prenant en compte cette amélioration: la première étape 9' consiste à élever au carré le champ électrique $E_i$ pour tout capteur i du réseau, c'est-à-dire pour i compris dans l'intervalle [0,N-1]. Les étapes suivantes sont identiques à celles de la figure 3a à ceci près que l'étape 10' de formation de faisceaux effectue la somme des carrés $E_i^2$ pondérés par un coefficient $\alpha'_{ik}$ tel que

$$\alpha'_{ik} = \exp\left[-j\,2\,\pi\,i\,(2d)\,\frac{\sin\theta_k}{\lambda}\right].$$

Dans la pratique, il est cependant préférable d'effectuer l'amélioration par élévation au carré après détection classique d'un objet. On peut ainsi faire une première détection grossière avec un pas angulaire assez grand, puis affiner seulement dans les zones élémentaires pour lesquelles on a détecté un ou plusieurs objets.

L'étape d'affinage angulaire peut s'effectuer par d'autres méthodes :

On peut par exemple utiliser une technique de type monopulse effectuant une comparaison de l'énergie reçue sur deux faisceaux adjacents. On peut également faire un suréchantillonnage angulaire suivi soit d'un calcul de barycentre, soit d'une recherche de maximum des signaux reçus dans les différentes directions angulaires. Il est enfin possible d'ajuster les coefficients $\alpha_{ik}$ de la FFC de façon adaptative.

La figure 4 est un exemple de réalisation d'un système de détection pour la mise en oeuvre du procédé selon l'invention, appliqué au problème spécifique de l'anti-collision pour automobile :

Dans cette application précise, on considère que la zone angulaire à observer par tout mobile a un angle $\Omega$ d'environ 16° comme représenté par l'arc référencé 11. Cette valeur numérique provient de la contrainte que l'on se donne a priori, à savoir l'analyse d'une aire située à l'avant du véhicule, d'une longueur comprise entre environ 35 mètres (typiquement au-delà de la zone aveugle du radar) et 200 mètres, et d'une largeur équivalente à trois voies de circulation, c'est-à-dire d'environ 10 mètres.

Selon l'invention, le système de détection 12 comprend un dispositif d'émission 13 constitué de plusieurs antennes d'émission 14, au nombre de 4 dans l'exemple pris, alimentées par un émetteur 15 d'ondes hyperfréquences. Les antennes d'émission 14 ont un diagramme d'émission, identique ou non, dont on n'a représenté que la largeur 16 à 3 dB du lobe principal. Conformément au procédé de l'invention, les différentes largeurs à 3 dB des lobes principaux couvrent des zones élémentaires, par exemple de 4°, partitionnant la zone angulaire $\Omega$.

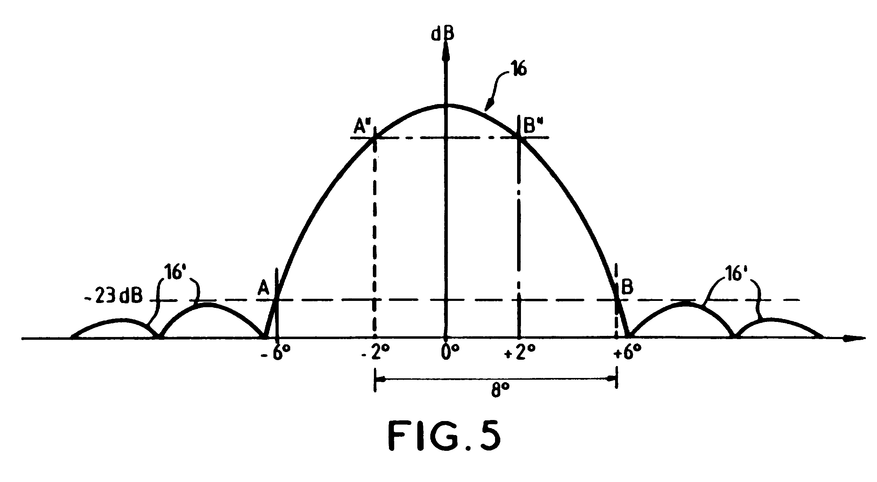

Un exemple de diagramme d'émission est donné sur la figure 5 : on retrouve la largeur 16 à 3 dB du lobe principal, couvrant un secteur [-2°, +2°]. Les lobes secondaires 16' sont inférieurs à un seuil, par exemple de -23 dB. Sur la figure 5, le lobe principal est compris dans l'intervalle [-6°, +6°], et la partie utile, dans l'intervalle [-2°, +2°].

Afin de pouvoir éclairer successivement dans les différentes zones élémentaires, les antennes 14 de la figure 4 sont contrôlées à l'émission par des moyens de commande, par exemple au moyen d'un séquenceur 17 commandant la fermeture d'un interrupteur multi-positions 18 d'un commutateur hyperfréquence 19.

Le système de détection 12 comporte en outre un dispositif de réception constitué d'un récepteur 21 relié à un réseau lacunaire de réception 22. Dans l'exemple de la figure 4, le réseau de réception 22 est dimensionné de façon à obtenir une résolution angulaire globale $\alpha$ supérieure à 2°, avec un diagramme d'émission conforme à celui de la figure 5. La longueur D du réseau est donnée par la formule approximative

$$\frac{70\lambda}{D} = \alpha$$

utilisable seulement dans l'hypothèse non limitative où l'on applique au réseau une pondération d'amplitude en cosinus, cette pondération permettant d'abaisser le niveau des lobes secondaires.

En outre, d'après la figure 5, la périodicité $\theta_R$ du réseau doit être environ égale à 8°, ce qui permet de déduire le pas d du réseau par la formule

$$\theta_R = \text{Arcsin}\frac{\lambda}{d}$$

soit $d \simeq 7{,}18\,\lambda$

Le nombre N de capteurs 22' du réseau est alors donné par la relation

$$D = d\,(N-1)$$

soit N = 6 dans notre exemple.

Ainsi, les contraintes posées selon l'invention ont permis de déterminer complètement le réseau lacunaire de réception 22.

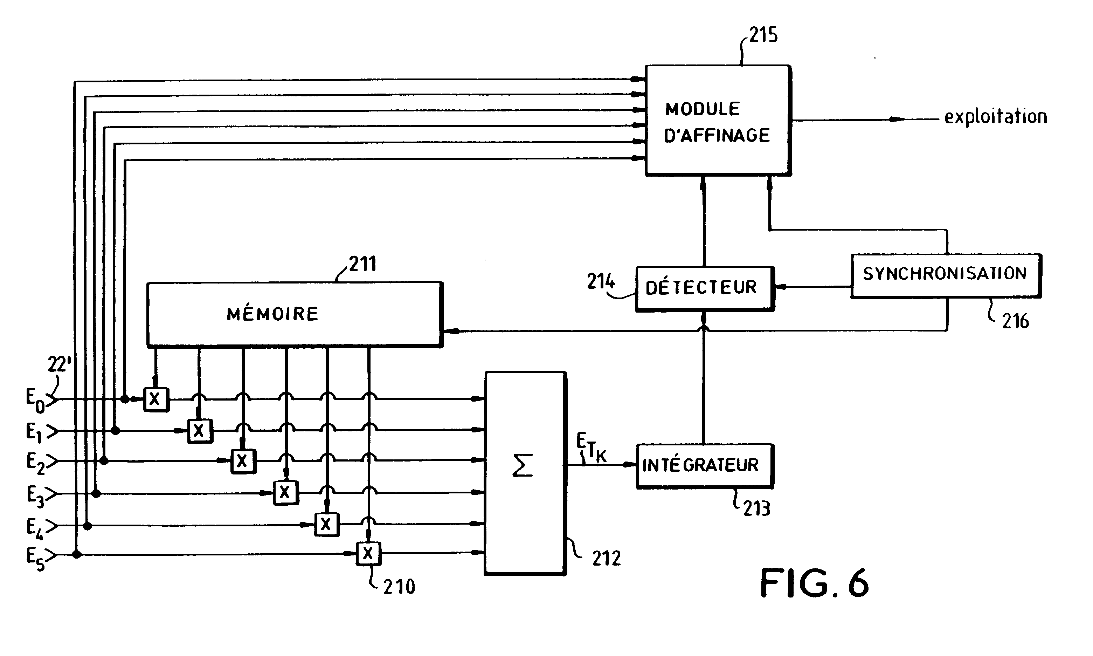

La figure 6 détaille un exemple possible de réalisation du récepteur 21 de la figure 4 : Ce récepteur 21 comporte, comme nous allons le détailler par la suite, de moyens 210, 211 et 212 pour la formation de faisceaux par le calcul, et des moyens 214 de détection des échos reçus dans les différentes directions $\theta_K$.

Les six signaux $E_o$ à $E_5$ reçus par les six capteurs 22' du réseau lacunaire sont multipliés, par l'intermédiaire de modules de multiplication 210, par des coefficients $\alpha_{ik}$ tels que définis précédemment, issus par exemple d'une mémoire 211. Les sorties des six modules de multiplication 210 sont ensuite additionnées dans un module de sommation 212 qui calcule ainsi le champ total $E_{TK}$ reçu dans une direction $\theta_k$. Le résultat de la sommation peut être avantageusement intégré dans un intégrateur 213 pour améliorer le rapport signal sur bruit. Après l'intégration, un détecteur 214 réalise une détection linéaire ou quadratique, puis une comparaison à un seuil prédéterminé, permettant de déduire la présence d'objets dans une ou plusieurs zones élémentaires. Si il y a détection, le détecteur 214 peut transmettre à un module d'affinage 215, un ordre d'affinage ainsi que les données (angles et distances) concernant les régions à explorer plus particulièrement. Ceci permet de ne faire, en amont du détecteur 214, qu'une formation de faisceaux et une détection grossières ayant pour conséquence un gain de temps de calcul. Le module d'affinage 215 met en oeuvre alors un algorithme améliorant la localisation angulaire tel que l'élévation au carré, l'écartométrie monopulse, le suréchantillonnage angulaire ou la formation de faisceau adaptative, à partir des signaux $E_o$ à $E_5$ reçus. La mémoire 211, le détecteur 214 et le module d'affinage 215 sont synchronisés par l'intermédiaire d'une synchronisation 216. A la sortie du module 215, on connaît avec une grande précision les positions angulaires et en distance des objets qui ont été détectés. Elles peuvent être exploitées pour décider de prévenir par tout moyen le conducteur s'il y a un risque éventuel de collision, selon des critères de danger prédéterminés.

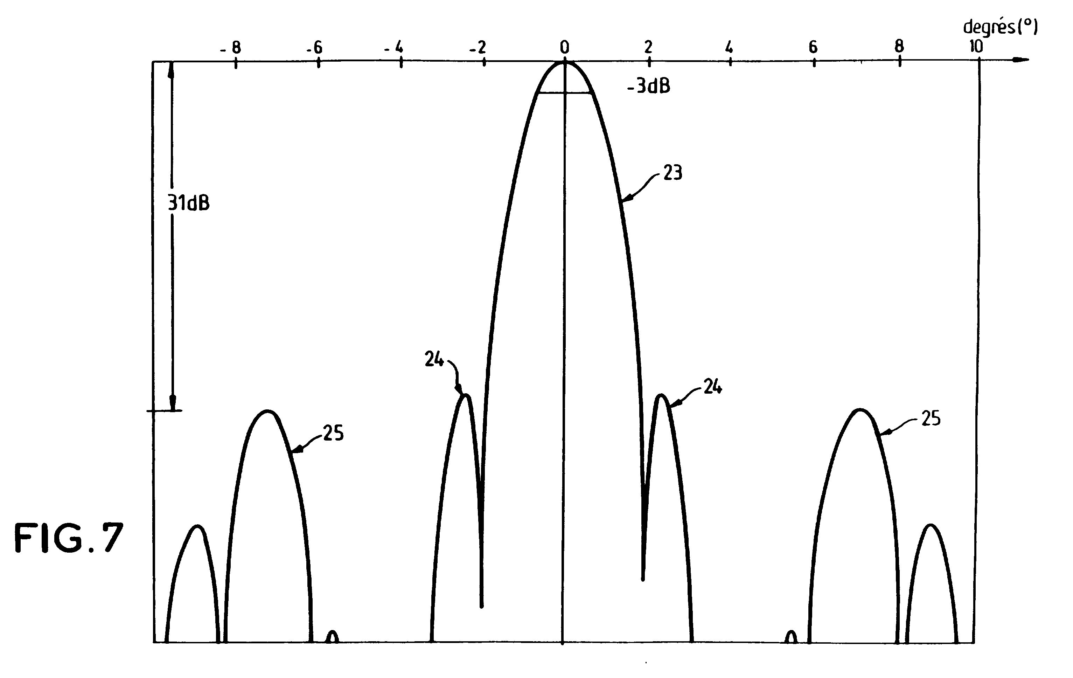

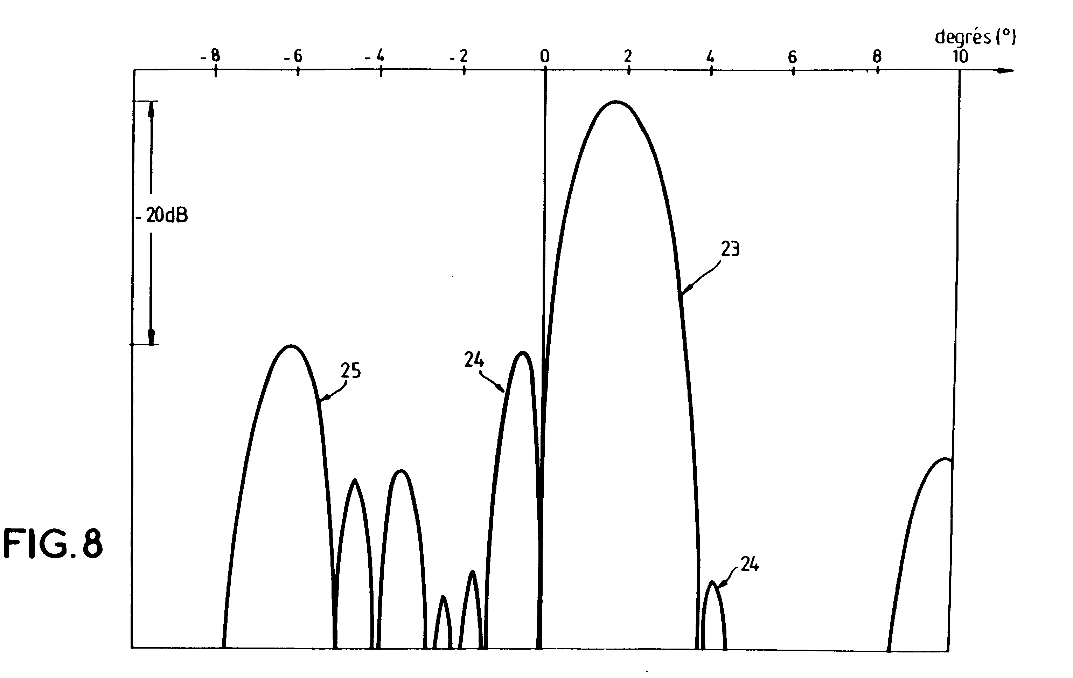

Les figures 7 et 8 montrent les résultats obtenus par simulations du produit de la fonction émission par la fonction réception globale du système décrit sur la figure 4, respectivement pour une visée du système suivant l'axe longitudinal du mobile porteur, et pour une visée dépointée de + 2 degrés par rapport à cet axe lorsque l'antenne émission éclaire de -2° à +2°. Ces simulations permettent de vérifier que le dimensionnement des antennes d'émission et du réseau de réception conduisent bien aux performances voulues, à savoir :

- une largeur de lobe principal 23 inférieure à 2 degrés ;
- un niveau très faible des lobes secondaires 24 (inférieur à -20 dB);
- des lobes de réseau 25 inférieurs d'au moins -20 dB par rapport au lobe principal 23.

Les résultats sont bien sûr transposables dans chacune des directions de visée propres aux antennes d'émission.

On peut obtenir de meilleurs résultats en optimisant le diagramme d'émission de façon à obtenir un maximum de portée dans l'axe du véhicule, et limiter la portée latérale au juste nécessaire: une façon simple consiste à améliorer la répartition de puissance émise en utilisant non plus des antennes d'émission identiques comme dans le cas de la figure 4, mais deux antennes centrales présentant une largeur à 3 dB plus faible que les deux antennes latérales.

On peut par exemple choisir des antennes centrales d'ouverture 3° et des antennes latérales d'ouverture 5° pour couvrir toute la zone angulaire de 16° avec une puissance sensiblement constante.

Le système mettant en oeuvre le procédé selon l'invention a été décrit dans le cadre bien particulier des systèmes d'anti-collision pour automobiles.

Bien entendu, l'invention peut aisément s'appliquer à différents domaines concernant par exemple :

- l'évitement d'obstacles pour hélicoptères ;
- l'aide à l'atterrissage pour avions ;
- la surveillance du trafic routier, aérien ou ferroviaire.

Dans cette dernière application, il faut alors équiper un radar monté par exemple sur un pylône en bordure de route, d'un système de détection selon l'invention, dans le but de mesurer la densité du trafic routier, ou de détecter d'éventuels accidents.

Le système selon l'invention, particulièrement intéressant pour les ondes millimétriques pour les raisons que nous avons vu précédemment, présente plus généralement un intérêt à chaque fois qu'il permet de réduire le coût global du radar en minimisant le nombre de récepteurs.

**Revendications**

1. Procédé de détection par ondes électromagnétiques d'un ou de plusieurs objets situés dans une zone angulaire donnée, consistant à éclairer successivement à l'émission une pluralité de zones élémentaires de ladite zone angulaire, selon au moins un diagramme d'émission présentant un lobe principal (3) défini comme étant la zone du diagramme d'émission située au-dessus d'un seuil fixé supérieur ou égal au niveau des lobes secondaires (4) dudit diagramme. Les zones élémentaires étant déterminées pour partitionner la zone angulaire à recevoir des signaux échos sur un réseau lacunaire (22) composé de plusieurs capteurs (22') et possédant une fonction de réseau telle que, pour chaque zone élémentaire éclairée, un premier lobe (6) de cette fonction de réseau soit compris dans le lobe principal du diagramme d'émission, les autres lobes (7, 8) étant en dehors du lobe principal, puis à détecter (10) la présence d'échos reçus et en déduire la position angulaire des objets détectés, le procédé étant caractérisé en ce que l'émission est telle que le lobe principal (3) éclairant chaque zone élémentaire englobe une partie utile (A'B' ; A"B") correspondant à une zone de non-recouvrement des lobes principaux (3') d'émission pour des zones élémentaires consécutives, le premier lobe (6) de la fonction de réseau étant compris dans ladite partie utile, en ce que l'écartement (d) des capteurs du réseau lacunaire de réception est fixé pour que la périodicité ($\theta_R$) du réseau soit au moins égale à la distance angulaire séparant une limite (B) du lobe principal d'émission (3) et la limite opposée (A', A") de la partie utile dudit lobe principal, en ce que pour chaque zone élémentaire éclairée, on effectue la réception dans une pluralité de directions angulaires $\theta_k$ appartenant à ladite zone élémentaire par formation de faisceaux par le calcul, les faisceaux formés pour chaque direction angulaire répondant à ladite fonction de réseau, et en ce que l'étape de détection (10) s'effectue par comparaison à un seuil donné.

2. Procédé de détection selon la revendication 1, caractérisé en ce qu'il comporte, en outre, une étape d'affinage angulaire lorsqu'il y a eu détection d'au moins un objet dans au moins une direction angulaire $\theta_K$.

3. Procédé de détection selon la revendication 2, caractérisé en ce que l'étape d'affinage angulaire consiste à :

- élever au carré (9') les champs électriques $E_i$ reçus par chaque capteur (22') du réseau (22) dans une direction $\theta_K$ :
- faire la somme (10') des carrés des champs électriques, pondérés par un coefficient $\alpha'_{iK}$ tel que :

$$\alpha'_{ik} = \exp\left[-j\, 2\,\pi\, i\, (2d)\, \frac{\sin\theta_k}{\lambda}\right].$$

où $\lambda$ est la longueur d'onde d'émission et d, la distance intercapteurs ;
- détecter, par comparaison à un seuil donné, la présence d'échos reçus dans la direction $\theta_K$.

4. Procédé de détection selon la revendication 2, caractérisé en ce que l'étape d'affinage angulaire consiste à effectuer la formation de faisceaux par le calcul (9) de façon adaptative.

5. Procédé de détection selon la revendication 2, caractérisé en ce que l'étape d'affinage angulaire consiste à rechercher les maxima des échos reçus et détectés dans les différentes directions angulaires $\theta_K$.

6. Procédé de détection selon la revendication 2, caractérisé en ce que l'étape d'affinage angulaire consiste à utiliser une technique monopulse par comparaison de l'énergie reçue sur deux faisceaux adjacents.

7. Système de détection par ondes électromagnétiques pour la mise en oeuvre du procédé selon les revendications 1 à 6, caractérisé en ce qu'il comporte :

- une pluralité d'antennes d'émission (14) contrôlées à l'émission par des moyens de commande (17, 18, 19) autorisant les antennes à éclairer successivement les zones élémentaires ;
- un dispositif de réception constitué dudit réseau lacunaire de réception (22) comprenant lesdits plusieurs capteurs (22'), et d'un récepteur (21) relié aux capteurs du réseau, ce récepteur disposant de moyens (210, 211, 212) pour la formation de faisceaux par le calcul, et de moyens de détection (214) des échos reçus dans les différentes directions angulaires $\theta_K$.

8. Système de détection selon la revendication 7, caractérisé en ce que lesdits moyens de commande (17, 18, 19) sont constitués d'un séquenceur (17) commandant la fermeture d'un interrupteur multi-positions (18) d'un commutateur (19).

9. Système de détection selon l'une quelconque des revendications 7 ou 8, caractérisé en ce que les moyens (210, 211, 212) pour la formation de faisceaux par le calcul dans une direction $\theta_K$ comportent :

- une mémoire (211) délivrant des coefficients $\alpha_{iK}$ tels que :

$$\alpha_{ik} = \exp\left[ -\mathrm{j}2\,\pi\mathrm{id}\,\frac{\sin\theta_k}{\lambda} \right]$$

- un nombre de modules de multiplication (210) égal au nombre de capteurs (22') du réseau, chaque module de multiplication effectuant la multiplication du champ électrique $E_i$ reçu par le capteur i par le coefficient $\alpha_{iK}$ correspondant ;
- un module de sommation (212) effectuant l'addition des sorties des modules de multiplication.

10. Système de détection selon l'une quelconque des revendications 7 à 9, caractérisé en ce que les moyens de détection (214) comportent un détecteur linéaire ou quadratique effectuant la détection par comparaison à un seuil donné de la sortie des moyens pour la formation de faisceaux, tous ces moyens étant synchronisés par une synchronisation (216).

11. Système de détection selon l'une quelconque des revendications 7 à 10, caractérisé en ce qu'il comporte, en outre, un module d'affinage (215) commandé par les moyens de détection (214) lorsqu'il y a eu détection et recevant de ces moyens de détection (214) des données relatives aux régions à explorer plus particulièrement.

12. Application du système de détection selon les revendications 7 à 11 à un système d'anti-collision pour véhicules, caractérisée en ce que chaque véhicule est équipé d'un système de détection fonctionnant en ondes millimétriques pour l'analyse d'une aire située à l'avant du véhicule.

13. Application du système de détection selon la revendication 12, caractérisée en ce que, l'aire à analyser correspondant à une zone angulaire d'environ 16°, le système de détection est constitué à l'émission de quatre antennes d'émission (14) dont les diagrammes d'émission partitionnent la zone angulaire, et, à la réception, de six capteurs (22').

14. Application du système de détection selon la revendication 13, caractérisée en ce que, parmi les quatre antennes d'émission (14), les deux antennes centrales présentent une largeur à 3 dB plus faible que les deux antennes latérales.

15. Application du système de détection selon les revendications 7 à 11 à la surveillance du trafic routier, caractérisée en ce qu un radar situé en bordure de route est équipé dudit système de détection dans le but de mesurer la densité du trafic routier et de détecter d'éventuels accidents.

## Patentansprüche

1. Verfahren zur Erfassung eines oder mehrerer in einer gegebenen Winkelzone vorhandener Objekte mittels elektromagnetischer Wellen, das darin besteht, sendeseitig nacheinander mehrere Elementarzonen des Winkelbereichs gemäß mindestens einem Sendediagramm mit einer Hauptkeule (3) zu beleuchten, die als die oberhalb einer Schwelle liegende Zone des Sendediagramms definiert ist, wobei diese Schwelle größer oder gleich dem Maximum der Sekundärkeulen (4) des Diagramms festgelegt ist und wobei die Elementarzonen die Winkelzone untereinander aufteilen, dann Echosignale in einem aus mehreren Sonden (22') gebildeten lückenhaften Netz (22) zu empfangen, das eine solche Netzfunktion besitzt, daß für jede beleuchtete Elementarzone eine erste Keule (6) dieser Netzfunktion in der Hauptkeule des Sendediagramms enthalten ist, während die anderen Keulen (7, 8) außerhalb der Hauptkeule liegen, und dann die empfangenen Echos zu erfassen (10) und die winkelmäßige Stellung der erfaßten Objekte daraus abzuleiten, dadurch gekennzeichnet, daß die Aussendung so erfolgt, daß die Hauptkeule (3), die jede Elementarzone beleuchtet, einen Nutzbereich (A'B'; A"B") entsprechend einer Zone der Nichtüberdeckung der Hauptsendekeulen (3') für aufeinanderfolgende Elementarzonen umfaßt, wobei die erste Keule (6) der Netzfunktion im Nutzbereich enthalten ist, daß der Abstand (d) der Sonden des lückenhaften Empfangsnetzes so festgelegt ist, daß die Periodizität ($\theta_R$) des Netzes mindestens gleich dem Winkelabstand zwischen einer Grenze (B) der Hauptsendekeule (3) und der gegenüberliegenden Grenze (A', A") des Nutzbereichs der Hauptkeule ist, daß für jede beleuchtete Elementarzone der Empfang in mehreren winkelmäßigen Richtungen $\theta_k$ erfolgt, die zur Elementarzone durch Strahlbildung mittels Berechnung gehören, wobei die für jede winkelmäßige Richtung gebildeten Strahlen der Netzfunktion entsprechen, und daß der Verfahrensschritt der Erfassung (10) durch Vergleich mit einer gegebenen Schwelle erfolgt.

**2.** Erfassungsverfahren nach Anspruch 1, dadurch gekennzeichnet, daß außerdem ein Verfahrensschritt der winkelmäßigen Verfeinerung vorgesehen ist, wenn in mindestens einer winkelmäßigen Richtung $\theta_K$ ein Objekt erfaßt worden ist.

**3.** Erfassungsverfahren nach Anspruch 2, dadurch gekennzeichnet, daß der Verfahrensschritt der winkelmäßigen Verfeinerung darin besteht,

- die von jeder Sonde i (22') des Netzes (22) in einer Richtung $\theta_K$ empfangenen elektrischen Felder $E_i$ zu quadrieren (9'),
- die Summe (10') der Quadrate der elektrischen Felder, gewichtet mit einem Koeffizienten $\alpha'_{ik}= \exp[-j2\pi i(2d)(\sin\theta)/\lambda]$, zu bilden, wobei $\lambda$ die Sendewellenlänge und d der Abstand zwischen Sonden ist,
- durch Vergleich mit einer gegebenen Schwelle das Vorliegen von aus der Richtung $\theta_K$ empfangenen Echos zu erfassen.

**4.** Erfassungsverfahren nach Anspruch 2, dadurch gekennzeichnet, daß der Verfahrensschritt der winkelmäßigen Verfeinerung darin besteht, die Strahlbildung durch Berechnung (9) adaptiv durchzuführen.

**5.** Erfassungsverfahren nach Anspruch 2, dadurch gekennzeichnet, daß der Verfahrensschritt der winkelmäßigen Verfeinerung darin besteht, die Maxima der empfangenen und erfaßten Echos in den verschiedenen winkelmäßigen Richtungen $\theta_K$ zu suchen.

**6.** Erfassungsverfahren nach Anspruch 2, dadurch gekennzeichnet, daß der Verfahrensschritt der winkelmäßigen Verfeinerung darin besteht, eine Einzelimpulstechnik zu verwenden und einen Vergleich der in zwei benachbarten Strahlen empfangenen Energiewerte vorzunehmen.

**7.** Erfassungssystem mittels elektromagnetischer Wellen zur Durchführung des Verfahrens nach den Ansprüchen 1 bis 6, dadurch gekennzeichnet, daß es enthält:

- mehrere Sendeantennen (14), deren Sendebetrieb durch Steuermittel (17, 18, 19) kontrolliert wird, die die Antennen nacheinander die Elementarzonen beleuchten lassen.
- eine Empfangsvorrichtung bestehend aus dem lückenhaften Empfangsnetz (22) mit den mehreren Sonden (22') und aus einem an die Sonden des Netzes angeschlossenen Empfänger (21), der Mittel (210, 211, 212) zur Strahlbildung durch Berechnung und Detektormittel (214) zur Erfassung der aus den verschiedenen winkelmäßigen Richtungen $\theta_K$ empfangenen Echos aufweist.

**8.** Erfassungssystem nach Anspruch 7, dadurch gekennzeichnet, daß die Steuermittel (17, 18, 19) von einer Folgeschaltung (17) gebildet werden, die einen Schalter (18) mit mehreren Stellungen einer Schaltvorrichtung (19) steuert.

**9.** Erfassungssystem nach einem beliebigen der Ansprüche 7 und 8, dadurch gekennzeichnet, daß die Mittel (210, 211, 212) für die Strahlbildung durch Berechnung in einer Richtung $\theta_K$ aufweisen:

- einen Speicher (211), der Koeffizienten $\alpha_{ik} = \exp[-j2\pi id(\sin\theta_k)/\lambda]$ liefert,
- eine Anzahl von Multiplikationsmoduln (210) entsprechend der Anzahl von Sonden (22') des Netzes, wobei jeder Multiplikationsmodul die Multiplikation des von der Sonde i empfangenen elektrischen Felds $E_i$ mit dem entsprechenden Koeffizienten $\alpha_{iK}$ durchführt,
- einen Summiermodul (212), der die Addition der Ausgänge der Multiplikationsmoduln durchführt.

**10.** Erfassungssystem nach einem beliebigen der Ansprüche 7 bis 9, dadurch gekennzeichnet, daß die Detektormittel (214) einen linearen oder quadratischen Detektor enthalten, der die Erfassung durch Vergleich des Ausgangs der Strahlbildungsmittel mit einer gegebenen Schwelle durchführt, wobei alle diese Mittel durch eine Synchronisationsschaltung (216) synchronisiert sind.

**11.** Erfassungssystem nach einem beliebigen der Ansprüche 7 bis 10, dadurch gekennzeichnet, daß es außerdem einen Verfeinerungsmodul (215) enthält, der von den Detektormitteln (214) im Fall einer Erfassung eines Objekts gesteuert wird und von diesen Detektormitteln Daten bezüglich der genauer zu untersuchenden Regionen empfängt.

**12.** Anwendung des Erfassungssystems nach den Ansprüchen 7 bis 11 auf ein Anti-Kollisionssystem für Fahrzeuge, dadurch gekennzeichnet, daß jedes Fahrzeug mit einem Erfassungssystem für den Betrieb im Millimeterwellenlängenbereich zur Analyse eines vor dem Fahrzeug liegenden Raums ausgerüstet ist.

**13.** Anwendung des Erfassungssystems nach Anspruch 12, dadurch gekennzeichnet, daß für einen zu analysierenden Raum entsprechend einer Winkelzone von etwa 16° das Erfassungssystem sendeseitig aus vier Sendeantennen (14), deren Sendediagramme die Winkelzone untereinander aufteilen, und empfangsseitig aus sechs Sonden (22') besteht.

**14.** Anwendung des Erfassungssystems nach Anspruch 13, dadurch gekennzeichnet, daß unter den vier Sendeantennen (14) die beiden zentralen Antennen eine geringere Breite an der 3dB-Grenze als die beiden seitlichen Antennen aufweisen.

**15.** Anwendung des Erfassungssystems nach den Ansprüchen 7 bis 11 auf die Straßenverkehrsüberwachung, dadurch gekennzeichnet, daß ein Radargerät am Rand der Straße mit dem Erfassungssystem versehen ist, um die Dichte des Straßenverkehrs zu messen und eventuelle Unfälle zu erfassen.

**Claims**

**1.** Method using electromagnetic waves to detect one or more objects located in a given angular zone, consisting in successively illuminating, during transmission, a plurality of elementary zones of the said angular zone, according to at least one transmission pattern exhibiting a main lobe (3) defined as being that zone of the transmission pattern located above a fixed threshold which is greater than or equal to the level of the side lobes (4) of the said pattern. The elementary zones being determined so as to divide up the angular zone to be received of the echo signals on a thinned array (22) composed of several sensors (22') and possessing an array function such that, for each illuminated elementary zone, a first lobe (6) of this array function lies in the main lobe of the transmission pattern, the other lobes (7, 8) being outside the main lobe and in then detecting (10) the presence of echoes received and deducing therefrom the angular position of the objects detected, the method being characterized in that the transmission is such that the main lobe (3) illuminating each elementary zone encompasses a useful part (A'B'; A"B") corresponding to a zone of non-overlap of the main transmission lobes (3') for consecutive elementary zones, the first lobe (6) of the array function lying in the said useful part, and in that the spacing (d) of the sensors of the thinned reception array is fixed so that the periodicity ($\theta_R$) of the array is at least equal to the angular distance separating a limit (B) of the main transmission lobe (3) and the opposite limit (A', A") of the useful part of the said main lobe, in that for each illuminated elementary zone, reception is performed in a plurality of angular directions $\theta_K$ belonging to the said elementary zone by digital beam formation, the beams formed for each angular direction complying with the said array function, and in that the detection step (10) is performed by comparing with a given threshold.

**2.** Detection method according to Claim 1, characterized in that it further comprises an angular refining step when at least one object has been detected in at least one angular direction $\theta_K$.

**3.** Detection method according to Claim 2, characterized in that the angular refining step consists in:

- squaring (9') the electrical fields $E_i$ received by each sensor i (22') of the array (22) in a direction $\theta_K$;
- summing (10') the squares of the electrical fields, weighted by a coefficient $\alpha'_{iK}$ such that:

$$\alpha'_{ik} = \exp\left[-j2\pi i(2d)\frac{\sin\theta_k}{\lambda}\right]$$

in which $\lambda$ is the transmission wavelength and d is the intersensor distance;
- detecting, by comparison with a given threshold, the presence of echoes received in the direction $\theta_K$.

**4.** Detection method according to Claim 2, characterized in that the angular refining step consists in carrying out digital beam forming (9) in an adaptive manner.

5. Detection method according to Claim 2, characterized in that the angular refining step consists in seeking maxima for the echoes received and detected in the various angular directions $\theta_K$.

6. Detection method according to Claim 2, characterized in that the angular refining step consists in using a monopulse technique by comparing the energy received on two adjacent beams.

7. Detection system using electromagnetic waves for carrying out the method according to Claims 1 to 6, characterized in that it comprises:

   - a plurality of transmitting antennae (14), transmission from which is controlled by command means (17, 18, 19) enabling the antennae to successively illuminate the elementary zones;
   - a receiving device consisting of the said thinned receiving array (22) and comprising the said several sensors (22'), and a receiver (21) linked to the sensors of the array, this receiver having means (210, 211, 212) for digital beam forming, and means (214) for detecting echoes received in the various angular directions $\theta_K$.

8. Detection system according to Claim 7, characterized in that the said command means (17, 18, 19) consist of a sequencer (17) commanding closing of a multiway breaker (18) on a switching unit (19).

9. Detection system according to either of Claims 7 and 8, characterized in that the means (210, 211, 212) for digital beam forming in a direction $\theta_{iK}$ comprise:

   - a memory (211) supplying coefficients $\alpha_{iK}$ such that:

$$\alpha_{ik} = \exp\left[-j2\pi id\frac{\sin\theta_k}{\lambda}\right]$$

   - a number of multiplication modules (210) equal to the number of sensors (22') in the array, each multiplication module performing multiplication of the electrical field $E_i$ received by the sensor i by the corresponding coefficient $\alpha_{iK}$;
   - a summing module (212) performing addition of the outputs from the multiplication modules.

10. Detection system according to any one of Claims 7 to 9 characterized in that the detection means (214) comprise a linear or quadratic detector performing detection by comparison with a given threshold of the output from the beam forming means, all these means being synchronized by a synchronization (216).

11. Detection system according to any one of Claims 7 to 10, characterized in that it further comprises a refining module (215) commanded by the detection means (214) when detection has occurred, and receiving from these detection means (214) data relating to those regions which should be explored more particularly.

12. Application of the detection system according to Claims 7 to 11 to a vehicle collision-prevention system, characterized in that each vehicle is fitted with a detection system operating with millimetric waves for analysing an area located ahead of the vehicle.

13. Application of the detection system according to Claim 12, characterized in that the area to be analysed corresponds to an angular zone of about 16°, and the detection system consists, for transmission, of four transmitting antennae (14) the transmission patterns of which divide up the angular zone and, for reception, six sensors (22').

14. Application of the detection system according to Claim 13, characterized in that, of the four transmitting antennae (14), the 3-dB width of the two central antennae is less than that of the two lateral antennae.

15. Application of the detection system according to Claims 7 to 11 to road traffic monitoring, characterized in that a roadside radar is fitted with the said detection system for the purposes of measuring road traffic density and detecting possible accidents.

FIG.1

FIG.3a

FIG.3b

FIG.2a

FIG.2b

FIG.2c

FIG.4

FIG.5

FIG.6

SYNCHRONISATION 216

MODULE D'AFFINAGE 215

exploitation

DÉTECTEUR 214

INTÉGRATEUR 213

$E_{T_K}$

$\sum$ 212

MÉMOIRE 211

210

22'

$E_0$ $E_1$ $E_2$ $E_3$ $E_4$ $E_5$

FIG.7

EP 0 568 427 B1

FIG.8